# EUROPEAN PATENT APPLICATION

(11) **EP 2 806 692 A1**
(43) Date of publication of application: **26.11.2014**
(21) Application number: 13738810.4
(22) Date of filing: 18.01.2013
(51) Int. Cl.: H04W 48/02

(54) **METHOD AND APPARATUS FOR ACCESS CLASS BARRING**

(30) Priority: 18.01.2012 CN 201210016231
(71) Applicant: ZTE Corporation, Shenzhen, Guangdong 518057 (CN)
(72) Inventor: HUANG, Ying, Shenzhen, Guangdong 518057 (CN); XIE, Feng, Shenzhen, Guangdong 518057 (CN); XI, Jin, Shenzhen, Guangdong 518057 (CN); CHEN, Lin, Shenzhen, Guangdong 518057 (CN); ZHU, Jianjian, Shenzhen, Guangdong 518057 (CN); ZHAI, Hengxing, Shenzhen, Guangdong 518057 (CN)
(74) Representative: Rapisardi, Mariacristina
(86) International application number: PCT/CN2013/070679
(87) International publication number: WO 2013/107383

(57) **Abstract**

The present invention provides a method and device for Access Class (AC) barring. The method comprises: the state-related AC barring parameters of a terminal are determined according to the state AC barring information of the terminal and the membership of the terminal in a cell; the access class barring is performed according to the determined state-related AC barring parameters. The present invention solves the problem that in related technique it may not be guaranteed that member UEs own higher priority than non-member UEs do. Hence it improves the effect of AC barring and conduces to improve user experience.

## Description

### Technical Field

The present invention relates to the field of communications, in particular to an access class barring method and device.

### Background

A home base station is a small-scale low power base station, which is mainly used in small range indoor places such as a home or an office. The home base station is connected to a mobile operator core network via wired access devices such as indoor cable, DSL (digital subscriber line) or fibre, providing wireless mobile communication network based access service for a specific subscriber. It sufficiently compensate for the current network deployment, being able to effectively improve indoor voice and fast speed data service coverage. There are many advantages, such as low coat, low power, simple access, plug-and-play, saving passback, compatible with the current terminal, improving the network coverage, etc.

Since the HeNB (home base station) only supplies services for a specific subscriber, the concept of closed subscriber group (CSG) is introduced, with each CSG having a unique identity that is CSG ID. In LTE (long-term evolution), three cells with different access modes are defined for the HeNB: CSG cell (corresponding to an HeNB with a closed mode, and merely registered to be accessible for a UE of a CSG group member), a hybrid cell (corresponding to a HeNB with a hybrid mode, being accessible for any terminal, but registered to be accessible for a UE of a CSG group member with a member identity with a higher priority), and an Open cell (corresponding to an HeNB with an open mode, accessible to any UE). The access mode and CSG ID of the HeNB is broadcast at an air interface, if the cell does not broadcast the CSG ID and the access mode, the cell is an open cell; if the cell only broadcasts the CSG ID, the cell is a CSG ID cell; and if the cell broadcasts the CSG ID and an access mode the value of which is "hybrid", the cell is a hybrid cell. The core network and the UE (user equipment) respectively store a CSG ID list that the subscriber may access with a member identity.

AC barring (access class barring mechanism) is used before each time an RRC (Radio Resource Controller) connection is established. By means of the mechanism, the operator may stop some UE to initiate an RRC connection establishment request for an MO (Mobile Originating) service, thus effectively control the load accessed to a channel; the UE should be checked to see if it is prohibited from accessing before the UE initiates the RRC connection establishment request each time; if the UE is prohibited, uplink synchronization may be performed, and the RRC connection establishment request message may be sent to the serving base station.

Each UE may belong to one or more access classes, and an access class (AC) of 0-9 may be allocated to all of the UEs randomly, with the access class stored in an SIM (Subscriber Identity Module)/USIM (Universal Subscriber Identity Module); in addition, the UE may also belong to one or more access classes among 5 special access classes (AC11-15, for use in emergency and security services), and the access class is also stored in the SIM/USIM; a UE belonging to a special class has a higher access priority.

A SIB2 (System Information Block) contains a series of AC barring mechanism parameters correspondingly to various services of the UE, including: an access class barring factor (AC-BarringFactor), an access class barring time (AC-BarringTime) and a barring indication bits corresponding to special access classes AC11-15 respectively; and the base station set the AC barring mechanism parameter according to the condition of the current load.

If the UE belongs to a special access class (AC11-15), as long as the barring indication bit in the system information block corresponding to the access class of the UE service is 0, it is indicated that the access of the UE service is not prohibited; as to a UE which does not belong to any special access class, after reading an AC barring parameter (access class barring parameter) in the system message, a random number (rand) is selected; if the rand is smaller than the AC-BarringFactor (access class barring factor), the access of the UE this time is not prohibited; otherwise, the access of the UE is prohibited for a period of time, with the length of the prohibiting time being (0.7+ 0.6 * rand) * AC-BarringTime (access class barring time).

In the above-mentioned scenario, for a UE not belonging to any special access class, both a member UE and a non-member UE judge whether it is accessible based on the comparison relationship between the random rand and the AC-BarringFactor; however, after the AC-BarringFactor is determined, whether the UE may be detected via the access class successively is determined by the random rand; therefore, when the member UE and the non-member UE perform access class detection, it maynot be guaranteed that the UE has a higher priority level relative to the non-member UE; that is, in relevant art, there is a problem that it maynot be guaranteed that a UE has a higher access priority level relative to the non-member UE.

### Summary

The present invention provides a method and device for access class barring, so as to at least solve the problem that it maynot be guaranteed that member UE has a higher access priority level relative to non-member UE.

According to an aspect of the present invention, a method for Access Class (AC) barring is provided. The method comprises: determining the state-related AC barring parameters of a terminal according to the state AC barring information of the terminal and the membership status of the terminal in a cell; barring AC according to the determined state-relatedAC barring parameters.

Preferably, the state access class barring information comprises at least one of the following: first state-related access class barring parameters, a membership status adjustment factor and access class barring parameters, wherein the access class barring parameters comprises an access class barring factor and access class barring time; the first state-related access class barring parameters comprises first membership-status-related access class barring parameters and first non-membership-status-related access class barring parameters, and a value range of the membership status adjustment factor is ~01.

Preferably, the step of determining the state-related access class barring parameters of the terminal according to the state access class barring information about the terminal and the membership of the terminal in the cell comprises: if the state access class barring information comprises the first state-related access class barring parameters, the terminal determining, according to a membership status of the terminal, the first state-related access class barring parameters corresponding to the membership status of the terminal to be the state-related access class barring parameters of the terminal, wherein the first state-related access class barring parameters comprises the first membership-status-related access class barring factor, the first non-membership-status-related access class barring factor, first membership-status-related access class barring time and first non-membership-status-related access class barring time.

Preferably, the state-related access class barring parameters comprises: a second membership-status-related access class barring factor, a second non-membership-status-related access class barring factor, second membership-status-related access class barring time and second non-membership-status-related access class barring time; if the state access class barring information comprises the membership status adjustment factor and the access class barring parameters, determining the state-related access class barring parameters of the terminal according to the state access class barring information about the terminal and the membership status of the terminal in the cell comprises: determining the second membership-status-related access class barring factor and the second non-membership-status-related access class barring factor of the state-related access class barring parameters of the terminal according to the state access class barring information of the terminal and the membership status of the terminal in the cell; and determining the second membership-status-related access class barring time and the second non-membership-status-related access class barring time of the state-related access class barring parameters of the terminal according to the state access class barring information of the terminal and the membership status of the terminal in the cell.

Preferably, determining the second membership-status-related access class barring factor and the second non-membership-status-related access class barring factor of the state-related access class barring parameters of the terminal according to the state access class barring information of the terminal and the membership status of the terminal in the cell comprises: in the case that the state access class barring information comprises the membership status adjustment factor and the access class barring parameters: if the terminal is a member terminal of the cell, then the second membership-status-related access class barring factor of the terminal is the larger one between the access class barring factor and the difference between 1 and the membership status adjustment factor; and if the terminal is a non-member terminal of the cell, then the second non-membership-status-related access class barring factor of the terminal is the smaller one between the access class barring factor and the difference between 1 and the membership status adjustment factor; or if the terminal is a member terminal of the cell, then the second membership-status-related access class barring factor of the terminal is the sum of the access class barring factor and the membership status adjustment factor; and if the terminal is a non-member terminal of the cell, then the second non-membership-status-related access class barring factor of the terminal is the difference between the access class barring factor and the membership status adjustment factor; or if the terminal is a member terminal of the cell, then the second membership-status-related access class barring factor of the terminal is the access class barring factor; and if the terminal is a non-member terminal of the cell, then the second non-membership-status-related access class barring factor of the terminal is the product of the access class barring factor and the membership status adjustment factor; or in the case of the state access class barring information comprises the access class barring parameters: if the terminal is a member terminal of the cell, then the second membership-status-related access class barring factor of the terminal is the larger one between the access class barring factor and the difference between 1 and the access class barring factor; and if the terminal is a non-member terminal of the cell, then the second non-membership-status-related access class barring factor of the terminal is the smaller one between the access class barring factor and the difference between 1 and the access class barring factor.

Preferably, determining the second membership-status-related access class barring time and the second non-membership-status-related access class barring time of the state-related access class barring parameters of the terminal according to the state access class barring information of the terminal and the membership status of the terminal in the cell comprises: if the terminal is a member terminal of the cell, then the second membership-status-related access class barring time of the terminal is the product of the access class barring time and the membership status adjustment factor; and if the terminal is a non-member terminal of the cell, then the second non-membership-status-related access class barring time of the terminal is the access class barring time.

Preferably, before determining the state-related access class barring parameters of the terminal according to the state access class barring information about the terminal and the membership status of the terminal in the cell, the above-mentioned method for access class barring also comprises: acquiring the first state-related access class barring parameters or the membership status adjustment factor, and the access class barring parameters included in the state access class barring information of the terminal; detecting whether the terminal is a member terminal of the cell according to a closed subscriber group identity (CSG ID) of the cell where the terminal is located and a whitelist, containing the CSG ID, stored by the terminal.

Preferably, the method for acquiring the state access class barring information comprises: receiving a system broadcast message carrying the state access class barring information.

Preferably, the membership status adjustment factor is acquired by means of one of the following: a base station indicating a value of the membership status adjustment factor and preconfiguring the value of the membership status adjustment factor.

According to another aspect of the present invention, a device for access class barring is provided. The device comprises: a determination module, configured to determine the state-related AC barring parameters of a terminal according to the state AC barring information of the terminal and the membership status of the terminal in a cell; and a detection module, configured to bar AC according to the determined state-relatedAC barring parameters.

Preferably, the state access class barring information comprises at least one of the following: first state-related access class barring parameters, a membership status adjustment factor and access class barring parameters, wherein the access class barring parameter comprises an access class barring factor and access class barring time; the first state-related access class barring parameters comprises first membership-status-related access class barring parameters and a first non-membership-status-related access class barring parameters, and a value range of the parameter status adjustment factor is 0~1.

Preferably, the determination module comprises: a first determination unit, configured to, if the state access class barring information comprises the first state-related access class barring parameters, determine, according to the membership status of the terminal, the first state-related access class barring parameters corresponding to the membership status of the terminal to be the state-related access class barring parameters of the terminal, wherein the first state-related access class barring parameters comprises a first membership-status-related access class barring factor, the first factor non-membership-status-related access class barring factor, first membership-status-related access class barring time and first non-membership-status-related access class barring time.

Preferably, the state-related access class barring parameters comprises: a second membership-status-related access class barring factor, a second non-membership-status-related access class barring factor, second membership-status-related access class barring time and second non-membership-status-related access class barring time; the determination module comprises: a second determination unit, configured to, in the case that the state access class barring information comprises the membership status adjustment factor and the access class barring parameters, determine the second membership-status-related access class barring factor and the second non-membership-status-related access class barring factor of the state-related access class barring parameters of the terminal according to the state access class barring information of the terminal and the membership status of the terminal in the cell; and a third determination unit, configured to, if the state access class barring information comprises the membership status adjustment factor and the access class barring parameters, determine the second membership-status-related access class barring time and the second non-membership-status-related access class barring time of the state-related access class barring parameters of the terminal according to the state access class barring information of the terminal and the membership status of the terminal in the cell.

Preferably, the second determination unit comprises: a first determination sub-unit, configured to, in the case that the state access class barring information comprises the membership status adjustment factor and the access class barring parameters, if the terminal is a member terminal of the cell, determine the second membership-status-related access class barring factor of the terminal to be the larger one between the access class barring factor and the difference between 1 and the membership status adjustment factor; and if the terminal is a non-member terminal of the cell, determine the second non-membership-status-related access class barring factor of the terminal to be the smaller one between the access class barring factor and the difference between 1 and the membership status adjustment factor; or a second determination sub-unit, configured to, in the case that the state access class barring information comprises the membership status adjustment factor and the access class barring parameters, if the terminal is a member terminal of the cell, determine the second membership-status-related access class barring factor of the terminal to be the sum of the access class barring factor and the membership status adjustment factor; and if the terminal is a non-member terminal of the cell, determine the second non-membership-status-related access class barring factor of the terminal to be the difference between the access class barring factor and the membership status adjustment factor; or a third determination sub-unit, configured to, in the case that the state access class barring information comprises the membership status adjustment factor and the access class barring parameters, if the terminal is a member terminal of the cell, determine the second membership-status-related access class barring factor of the terminal to be the access class barring factor; and if the terminal is a non-member terminal of the cell, determine the second non-membership-status-related access class barring factor of the terminal to be the product of the access class barring factor and the membership status adjustment factor; or a fourth determination sub-unit, configured to, in the case that the state access class barring information comprises the access class barring parameters, if the terminal is a member terminal of the cell, determine the second membership-status-related access class barring factor of the terminal to be the larger one between the access class barring factor and the difference between 1 and the access class barring factor; and if the terminal is a non-member terminal of the cell, determine the second non-membership-status-related access class barring factor of the terminal to be the smaller one between the access class barring factor and the difference between 1 and the access class barring factor.

Preferably, the third determination unit comprises: a fifth determination sub-unit, configured to, if the terminal is a member terminal of the cell, determine the second membership-status-related access class barring time of the terminal to be the product of the access class barring time and the membership status adjustment factor; and a sixth determination sub-unit, configured to, if the terminal is a non-member terminal of the cell, determine the second non-membership-status-related access class barring time of the terminal to be the access class barring time.

Preferably, the device for access class barring further comprises an acquisition module, configured to acquire the membership/non-membership status related access class barring parameters or the membership status adjustment factor, the access class barring factor and the access class barring time included in the state access class barring information of the terminal; and a judgement module, configured to detect whether the terminal is a member terminal of the cell according to a CSG ID of the terminal in the cell and a whitelist, containing the CSG ID, stored by the terminal.

Preferably, the acquisition module comprises: a first acquisition unit, configured to acquire the state access class barring information by receiving a system broadcast message carrying the state access class barring information.

Preferably, the acquisition module comprises: a second acquisition unit, configured to acquire the value of the membership status adjustment factor indicated by the base station; and/or a third acquisition unit, configured to acquire a preconfigured value of the membership status adjustment factor.

In the present invention, the state-related AC barring parameters of a terminal is determined according to the state AC barring information of the terminal and the membership status of the terminal in a cell; that is, a membership-status-related access class barring parameters of a member terminal and a membership-status-related access class barring parameters of a non-member terminal are determined respectively; during access class detection, the case where member terminal and the non-member terminal may be detected based on different probability is realised; and the problem that in related technique it may not be guaranteed that member UEs own higher priority than non-member UEs do is solved, and hence it improves the effect of AC barring and conduces to improve user experience.

### BriefDescription of the Drawings

Drawings, provided for further understanding of the present invention and forming a part of the specification, are used to explain the present invention together with embodiments of the present invention rather than to limit the present invention. In the drawings:
Fig. 1 is a flowchart of a method for access class barring according to an embodiment of the present invention;
Fig. 2 is a schematic flowchart of an existing UE initiating an MO service;
Fig. 3 is a schematic flowchart of an existing UE initiating an MO service to perform access class barring;
Fig. 4 is a flowchart of a method for access class barring according to an embodiment of the present invention;
Fig. 5 is a flowchart of a first method for determining state-related access class barring parameters according to an embodiment of the present invention;
Fig. 6 is a flowchart of a second method for determining state-related access class barring parameters according to an embodiment of the present invention;
Fig. 7 is a flowchart of a third method for determining state-related access class barring parameters according to an embodiment of the present invention;
Fig. 8 is a flowchart of a fourth method for determining state-related access class barring parameters according to an embodiment of the present invention;
Fig. 9 is a flowchart of performing access class barring according to state-related access class barring parameters according to an embodiment of the present invention;
Fig. 10 is a structural block diagram of an apparatus for access class barring according to an embodiment of the present invention;
Fig. 11 is a block diagram of the structure of a determination module according to a preferred embodiment of the present invention;
Fig. 12 is a block diagram of the structure of a second determination unit according to a preferred embodiment of the present invention;

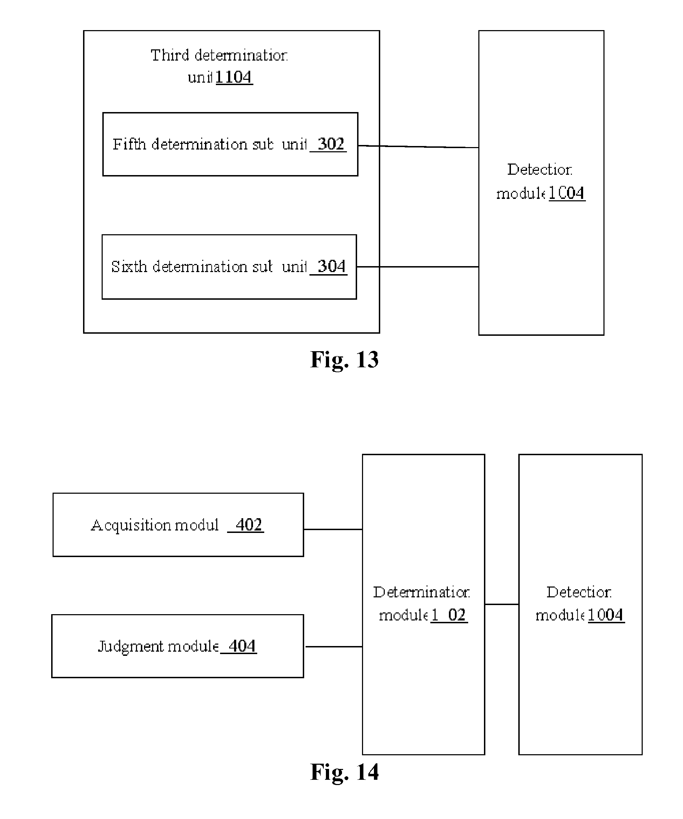

Fig. 13 is a block diagram of the structure of a third determination unit according to a preferred embodiment of the present invention;
Fig. 14 is a structural block diagram of another apparatus for access class barring according to a preferred embodiment of the present invention; and
Fig. 15 is a block diagram of the structure of an acquisition module according to a preferred embodiment of the present invention.

### Detailed Description of the Embodiments

The present invention is described below with reference to the accompanying drawings and embodiments in detail. Note that, the embodiments of the present invention and the features of the embodiments may be combined with each other if there is no conflict.

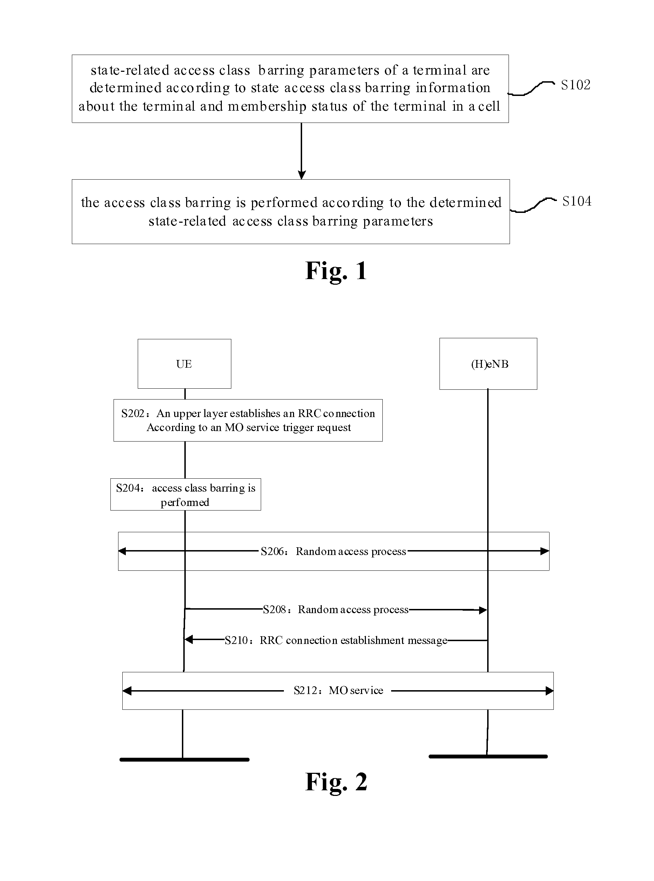

Fig. 1 is a flowchart of a method for access class barring according to an embodiment of the present invention, as shown in fig. 1, the method for access class barring comprises:
S102: state-related access class (AC) barring parameters of a terminal are determined according to state access class barring information about the terminal and membership status of the terminal in a cell; and
S104: the access class barring is performed according to the determined state-related access class barring parameters.

In the above-mentioned preferred embodiment, the state-related AC barring parameters of the terminal are determined according to the state AC barring information of the terminal and the membership status of the terminal in the cell; that is, the membership-status-related access class barring parameters of a member terminal and the membership-status-related access class barring parameters of a non-member terminal are determined respectively; during access class detection, the case where the member terminal and the non-member terminal may be detected based on different probability is realised; and the problem that in related art it may not be guaranteed that member UEs own higher priority than non-member UEs do is solved, and hence it improves the effect of AC barring and conduces to improve user experience.

The above-mentioned state access class barring information may comprise various parameters related to access class barring, preferably, in this embodiment, the above-mentioned state access class barring information comprises at least one of the following: first state-related access class barring parameters, a membership status adjustment factor and access class barring parameters, wherein the access class barring parameters may comprise an access class barring factor and access class barring time; the first state-related access class barring parameters comprises first membership-status-related access class barring parameters and first non-membership-status-related access class barring parameters, and a value range of the membership status adjustment factor may be 0~1.

In order to improve the flexibility of determining the state-related access class barring parameters of the terminal, a method for determining the state-related access class barring parameters of the terminal is provided by this preferred embodiment; for embodiment, determining the state-related access class barring parameters of the terminal according to the state access class barring information about the terminal and the membership status of the terminal in the cell comprises: if the state access class barring information comprises the first state-related access class barring parameters, the terminal determining, according to the membership status of the terminal, the first state-related access class barring parameters corresponding to the membership status of the terminal to be the state-related access class barring parameters of the terminal, wherein the first state-related access class barring parameters comprises a first membership-status-related access class barring factor, a first non-membership-status-related access class barring parameter, first membership-status-related access class barring time and first non-membership-status-related access class barring time.

In the above-mentioned preferred embodiment, the terminal may acquire the first state-related access class barring parameters by receiving the state access class barring information, and determine, according to the membership status of the terminal, the first state-related access class barring parameters corresponding to the membership of the terminal to be the state-related access class barring parameters; and the terminal may directly perform access class barring according to the determined state-related access class barring parameters; preferably, the first state-related access class barring parameters included in the state access class barring information may be determined by the base station, and the base station may determine the first state-related access class barring parameters according to the current condition of load; for embodiment, when the current load is large, the base station may adjust the access class barring parameters to acquire the first state-related access class barring parameters; if the terminal is a member terminal, the first membership-status-related access class barring factor is the larger one between the access class barring factor and the difference between 1 and the access class barring factor; and if the terminal is a non-member terminal, the first non-membership-status-related access class barring factor is the smaller one between the access class barring factor and the difference between 1 and the access class barring factor; so that the probability of the member terminal and the non-member terminal passing the access class barring are improved, and at the same time the base station may determine the first state-related access class barring parameters flexibly according to the condition of load.

Preferably, the above-mentioned state-related access class barring parameters may comprise: second membership-status-related access class barring parameters, a second non-membership-status-related access class barring factor, second membership-status-related access class barring time and second non-membership-status-related access class barring time.

In order to enable terminals with different membership statuses to pass the detection with different priority levels, the state-related access class barring parameters of the terminal may be determined according to the state access class barring information of the terminal and the membership status of the terminal in the cell, wherein it is included: when the state access class barring information comprises the membership status adjustment factor and the access class barring parameters, the second membership-status-related access class barring factor and the second non-membership-status-related access class barring factor in the state-related access class barring parameters of the terminal are determined according to the state access class barring information of the terminal and the membership status of the terminal in the cell; and when the state access class barring information comprises the membership status adjustment factor and the access class barring parameters, the second membership-status-related access class barring time and the second non-membership-status-related access class barring time in the state-related access class barring parameters of the terminal are determined according to the state access class barring information of the terminal and the membership status of the terminal in the cell.

In the above-mentioned preferred embodiment, when the state access class barring information comprises the membership status adjustment factor and the access class barring parameters, the second membership-status-related access class barring time, the second non-membership-status-related access class barring time, the second membership-status-related access class barring factor and the second non-membership-status-related access class barring factor of the terminal, which are in the state-related access class barring parameters of the terminal, are determined according to the state access class barring information of the terminal and the membership status of the terminal, so that terminals with different membership statuses pass the detection with different priority levels during access class detection.

In order to realize that terminals with different membership statuses may perform access class barring based on the second membership-status-related access class barring factor and the second non-membership-status-related access class barring factor, a plurality of preferred methods are provided in this embodiment for determining the second membership-status-related access class barring factor and the second non-membership-status-related access class barring factor of the state-related access class barring parameters of the terminal according to the state access class barring information of the terminal and the membership status of the terminal in the cell; for embodiment, in the case that the state access class barring information comprises the membership status adjustment factor and the access class barring parameters: if the terminal is a member terminal of the cell, the second membership-status-related access class barring factor of the terminal may be the larger one between the access class barring factor and the difference between 1 and the membership adjustment factor; and if the terminal is a non-member terminal of the cell, the second non-membership-status-related access class barring factor of the terminal may be the smaller one between the access class barring factor and the difference between 1 and the membership adjustment factor; or if the terminal is a member terminal of the cell, the second membership-status-related access class barring factor of the terminal may be the sum of the access class barring factor and the membership status adjustment factor; and if the terminal is a non-member terminal of the cell, then the second non-membership-status-related access class barring factor of the terminal may be the difference between the access class barring factor and the membership status adjustment factor; or if the terminal is a member terminal of the cell, the second membership-status-related access class barring factor of the terminal may be the access class barring factor; and if the terminal is a non-member terminal of the cell, then the second non-membership-status-related access class barring factor of the terminal may be the product of the access class barring factor and the membership status adjustment factor; and in the case that the state access class barring information comprises the access class barring parameters: if the terminal is a member terminal of the cell, the second membership-status-related access class barring factor of the terminal is the larger one between the access class barring factor and the difference between 1 and the access class barring factor; and if the terminal is a non-member terminal of the cell, the second non-membership-status-related access class barring factor of the terminal is the smaller one between the access class barring factor and the difference between 1 and the access class barring factor.

In the above-mentioned preferred embodiment, a plurality of methods are provided for determining a state-related access class barring factor of a terminal according to state access class barring information about the terminal and the membership status of the terminal in a cell. The second membership-status-related access class barring factor and the second non-membership-status-related access class barring factor of the terminal may be determined as required, so as to satisfy different requirements, hence enhancing the practicability.

In order to realize that terminals with different memberships may examine the access class based on the second membership-status-related access class barring time and the second non-membership-status-related access class barring time, a preferred method is provided in this embodiment for determining the second membership-status-related access class barring time and the second non-membership-status-related access class barring time. For embodiment, when the terminal is a member terminal of the cell, the second membership-status-related access class barring time of the terminal may be the product of the access class barring time and the membership status adjustment factor; and when the terminal is a non-member terminal of the cell, the second non-membership-status-related access class barring time of the terminal may be the access class barring time, so as to determine the second membership-status-related access class barring time and second non-membership-status-related access class barring time for terminals with different membership statuses, and to realize that terminals with different membership statues are detected with different access barring time during access class detection.

Preferably, before determining the state-related access class barring parameters of the terminal according to state access class barring information about the terminal and the membership status of the terminal in the cell, the first state-related access class barring parameters or the membership status adjustment factor, and the access class barring parameters, which are included in the state access class barring information of the terminal, may be acquired via a system broadcast message (SIB2). It is detected whether the terminal is a member terminal of the cell according to a closed subscriber group identity (CSG ID) of the terminal in the cell and a whitelist which contains the CSG ID and is stored by the terminal, wherein the whitelist which contains the CSG ID and is stored by the terminal is the CSG ID of the terminal in the cell which the terminal may access with an identity of a member; the closed subscriber group identity (CSG ID) of the cell is compared to the stored whitelist containing the CSG ID to detect whether the terminal is a member terminal of the cell.

In order to enhance the practicability of this embodiment, the above-mentioned state access class barring information may be acquired in a plurality ways, for embodiment, the state access class barring information is acquired by receiving the system broadcast message carrying the state access class barring information.

In order to satisfy different application scenarios, a plurality of preferred method for acquiring a membership status adjustment factor are provided in this embodiment, for embodiment, the membership status adjustment factor may be acquired by the base station indicating the value of the membership status adjustment factor, and the value of the membership status adjustment factor may also be preconfigured; and in this preferred embodiment, a plurality of method for acquiring the membership status adjustment factor are also provided, so as to satisfy different application requirements.

In the prior art, when the UE does not allow a special access class, the flow of the UE initiating an MO service is as shown in Fig. 2; the flow of the UE initiating the MO service comprises:
S202: an upper layer requests to establish an RRC connection to perform MO service (mobile originating, including mobile originating calls, mobile originating signalling and mobile originating CS fallback);
S204: the UE performs access class barring;
S206: if the access class barring succeeds, a random access process is initiated;
S208: as the third message in the random process, the UE sends an RRC connection request message to the base station;
S210: the base station sends an RRC connection establishment message to the UE, with the message also being able to be used for random access competition elimination; and
S212: if the competition is eliminated, the RRC connection establishment succeeds, and the UE may perform the MO service.

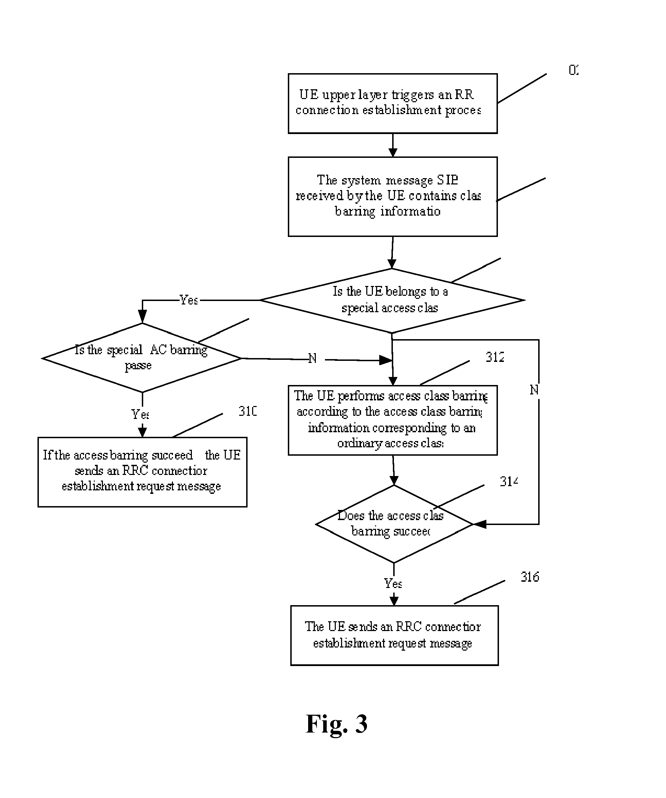

Fig. 3 is a schematic flowchart of an existing UE initiating an MO service to perform access class barring, and as shown in Fig. 3, the flow of the UE performing access class barring comprises:
S302: UE upper layer triggers an RRC connection establishment process;
S304: the system message SIB2 received by the UE contains class barring information (ac-BarringInfo);
S306: does the UE belong to a special access class;
S308: has the UE passed the access class barring;
S310: if the UE stores a plurality of special access classes (ACs) within the range of 11~15 in the USIM, and the access class barring information in the system message SIB2 contains an access class barring IE ac-BarringForSpecialAC corresponding to the special AC, then if a bit corresponding to at least one special AC in the ac-BarringForSpecialAC is 0, it indicates that the access is not prohibited, that is, the access class barring is passed successfully; and the UE sends an RRC connection establishment request message to the serving base station;
S312: otherwise, the UE performs access class barring according to the access class barring information corresponding to normal access classes (AC 0~9), wherein the access class barring information comprises the access class barring factor and the access class barring time;
S314: whether the UE has passed the access class barring is detected;
S316: if the random number (rand) selected is smaller than the access class barring factor, the access class barring succeeds, and the RRC connection establishment request message is sent to the serving base station, otherwise, the access class barring fails.

In combination with the flow of UE initiating an MO service to perform access class barring shown in Fig. 2 and Fig. 3, it may be seen that in the prior art, for UE not belonging to any special access class, both a member UE and a non-member UE judge whether it is accessible based on the comparison relationship between the random rand and the ac-BarringFactor; however, after the ac-BarringFactor is determined, whether the UE may be detected via the access class successively is determined by the random rand; therefore, when the member UE and the non-member UE perform access class barring, it may not be guaranteed that the member UE has a higher access priority level relative to the non-member UE.

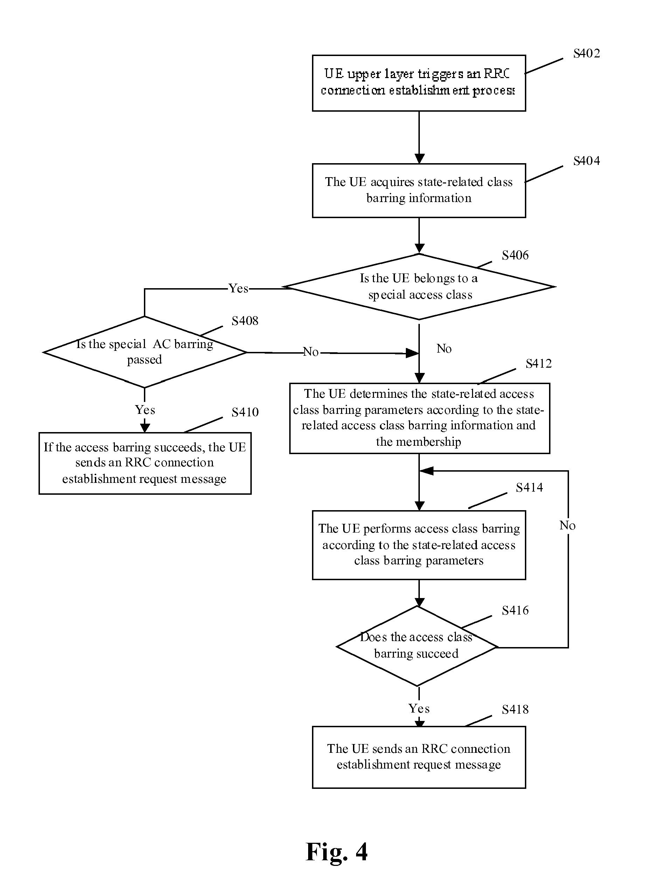

The method for access class barring is described in detail below in combination with particular embodiments, as shown in Fig. 4, the method for access class barring comprises:
S402: UE upper layer triggers an RRC connection establishment process;
S404: the UE acquires state-related class barring information; the state-related class barring information may be a membership status adjustment factor or access class barring parameters, or first state-related access class barring parameters, wherein the membership status adjustment factor may be indicated by the base station to the UE or preconfigured thereby according to the policy of an operator; and preferably, the UE may acquire the state-related class barring information by means of the three methods as follows:
   1) the UE acquires the membership status adjustment factor and the access class barring parameters by the system message SIB2; or
   2) the UE acquires the membership/non-membership status related access class barring parameters by the system message SIB2; or
   3) the UE acquires the access class barring parameters by the system message SIB2, and acquires the membership status adjustment factor by means of pre-configuration;
S406: whether the UE belongs to a special access class;
S408: whether the UE has passed the access class barring;
S410: if the UE stores a plurality of special access classes (ACs) within the range of 11~15 in the USIM, and the access class barring information in the system message SIB2 contains an access class barring IE ac-BarringForSpecialAC corresponding to the special AC, then if at least one bit, which is corresponding to a special AC in the ac-BarringForSpecialAC, is 0, it indicates that the access is not prohibited, that is, the access class barring is passed successfully; and the UE sends an RRC connection establishment request message to the serving base station;
S412: the UE detects its membership status in the hybrid cell, and determines the state-related access class barring parameters according to the state-related access class barring information and the membership status of the UE in the hybrid cell, the state-related access class barring parameters are the second membership-status-related access class barring parameters or the second non-membership-status-related access class barring parameters, wherein the second membership-status-related access class barring parameters comprises the second membership-status-related access class barring factor and the second membership-status-related access class barring time, and the second non-membership-status-related access class barring parameters comprises the second non-membership-status-related access class barring factor and the second non-membership-status-related access class barring time;
S414: the UE performs access class barring according to the above-mentioned second membership-status-related access class barring factor or the second non-membership-status-related access class barring factor; if the UE is a member, the second membership-status-related access class barring factor is used; and if the UE is not a member, the second non-membership-status-related access class barring factor is used;
S416: it is detected whether the access class barring of the UE succeeds, if yes, it turns to step S418, otherwise, it turns to step S412; and
S418: if the UE access class barring succeeds, the UE sends an RRC connection establishment request message to the serving base station.

The step of determining the state-related access class barring parameters of the terminal in the above-mentioned embodiment may be implemented with a plurality of ways, and description is made in detail in combination with particular embodiments.

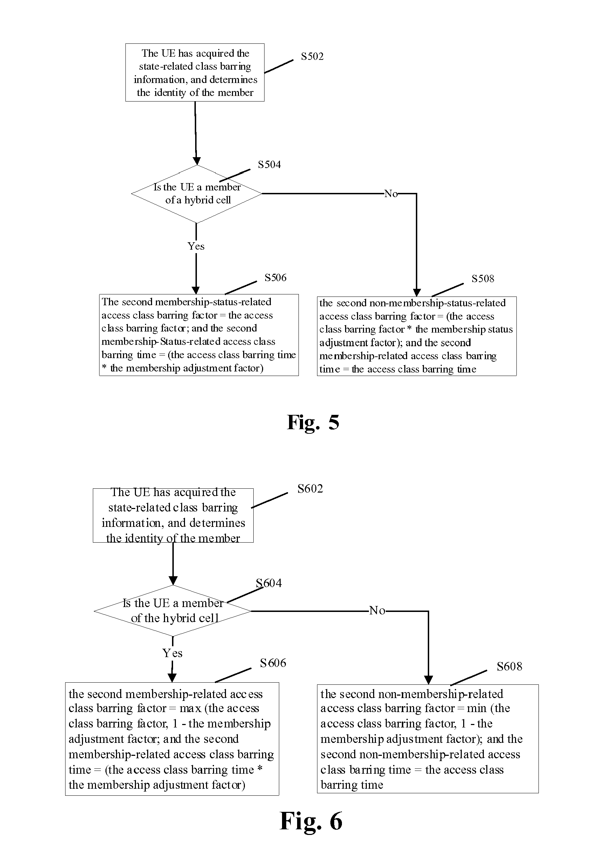

Fig. 5 is a flowchart of a first method for determining state-related access class barring parameters according to an embodiment of the present invention, as shown in Fig. 5, the method for determining the state-related access class barring parameters comprises:
S502: the UE has acquired the state-related class barring information, and then the UE makes comparison according to the CSG ID of the hybrid cell and the whitelist (which may be the CSG ID list of member identity access) stored by the UE;
S504: it is detected whether the UE is a member user of the hybrid cell;
S506: if the UE is a member user, the second membership-status-related access class barring factor of the UE = the access class barring factor; and the second membership-status-related access class barring time = (the access class barring time * the membership status adjustment factor);
S508: if the UE is a non-member user, the second non-membership-status-related access class barring factor of the UE = (the access class barring factor * the membership status adjustment factor); and the second membership-status-related access class barring time = the access class barring time.

Fig. 6 is a flowchart of a second method for determining state-related access class barring parameters according to an embodiment of the present invention, as shown in Fig. 6, the method for determining the state-related access class barring parameters comprises:
S602: the UE has acquired the state-related class barring information, then the UE makes comparison according to the CSG ID of the hybrid cell and the whitelist (which may be the CSG ID list of member identity access) stored by the UE, and determines whether it is a member user of the hybrid cell;
S604: it is detected whether the UE is a member user of the hybrid cell;
S606: if the UE is a member user, the second membership-status-related access class barring factor of the UE = max (the access class barring factor, 1 - the membership status adjustment factor; and the second membership-status-related access class barring time = (the access class barring time * the membership status adjustment factor);
S608: if the UE is not a member user, the second non-membership-status-related access class barring factor of the UE = min (the access class barring factor, 1 - the membership status adjustment factor); and the second non-membership-status-related access class barring time = the access class barring time.

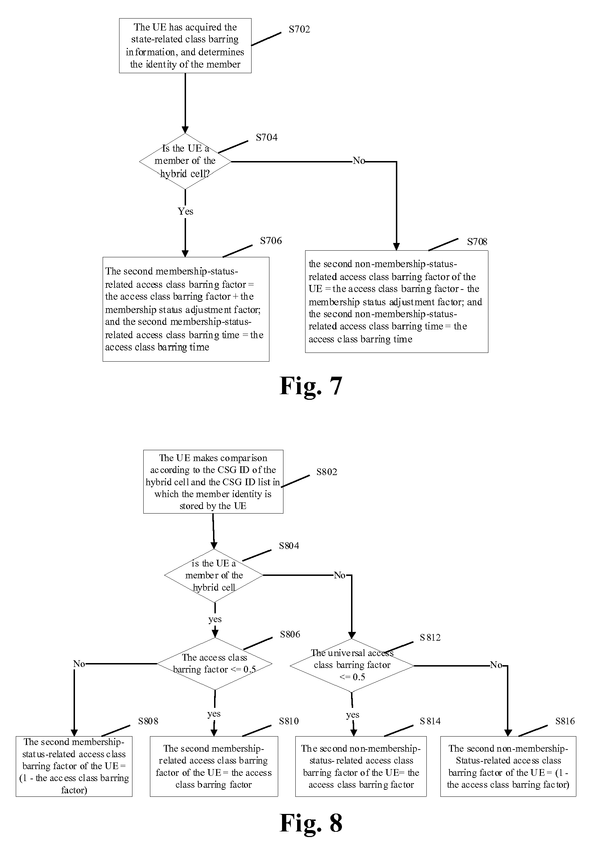

Fig. 7 is a flowchart of a third method for determining state-related access class barring parameters according to an embodiment of the present invention, as shown in Fig. 7, the method for determining the state-related access class barring parameters comprises:
S702: the UE has acquired the state-related class barring information, then the UE makes comparison according to the CSG ID of the hybrid cell and the whitelist (which may be the CSG ID list of member identity access) stored by the UE, and determines whether it is a member user of the hybrid cell;
S704: it is detected whether the UE is a member user of the hybrid cell;
S706: if the UE is a member user, the second membership-status-related access class barring factor of the UE = the access class barring factor + the membership status adjustment factor; and the second membership-status-related access class barring time = the access class barring time; that is, the UE adjusts the access class barring factor according to the membership in the hybrid cell; and
S708: if the UE is not a member user, the second non-membership-status-related access class barring factor of the UE = the access class barring factor - the membership status adjustment factor; and the second non-membership-status-related access class barring time = the access class barring time; that is, the UE adjusts the access class barring factor according to the membership status in the hybrid cell.

Fig. 8 is a flowchart of a fourth method for determining a state-related access class barring parameters according to an embodiment of the present invention, as shown in Fig. 8, the method for determining the state-related access class barring parameters comprises:
S802: the UE makes comparison according to the CSG ID of the hybrid cell and the whitelist (which may be the CSG ID list of member identity access) stored by the UE, and determines whether it is a member terminal of the hybrid cell;
S804: it is detected whether the terminal is a member terminal of the hybrid cell; and if yes, it turns to step S806, otherwise, it turns to step S812;
S806: if the UE is a member terminal, it is detected whether the access class barring factor corresponding to the service contained in the access class barring information in SIB2 is smaller than or equal to 0.5; and if yes, it turns to step S808, otherwise, it turns to step S810;
S808: if the access class barring factor corresponding to the service contained in the access class barring information in theSIB2 is smaller than or equal to 0.5, the second membership-status-related access class barring factor of the UE equals (1 - the access class barring factor);
S810: if the access class barring factor corresponding to the service contained in the access class barring information in theSIB2 is greater than 0.5, the second membership-status-related access class barring factor of the UE equals the access class barring factor;
S812: if the UE is not a member terminal, it is detected whether the access class barring factor corresponding to the service contained in the access class barring information in SIB2 is smaller than or equal to 0.5; and if yes, it turns to step S814, otherwise, it turns to step S816;
S814: if the access class barring factor corresponding to the service contained in the access class barring information in theSIB2 is smaller than or equal to 0.5, the second non-membership-status-related access class barring factor of the UE equals the access class barring factor;
S816: if the access class barring factor corresponding to the service contained in the access class barring information in theSIB2 is greater than 0.5, the second non-membership-status-related access class barring factor of the UE equals (1 - the access class barring factor).

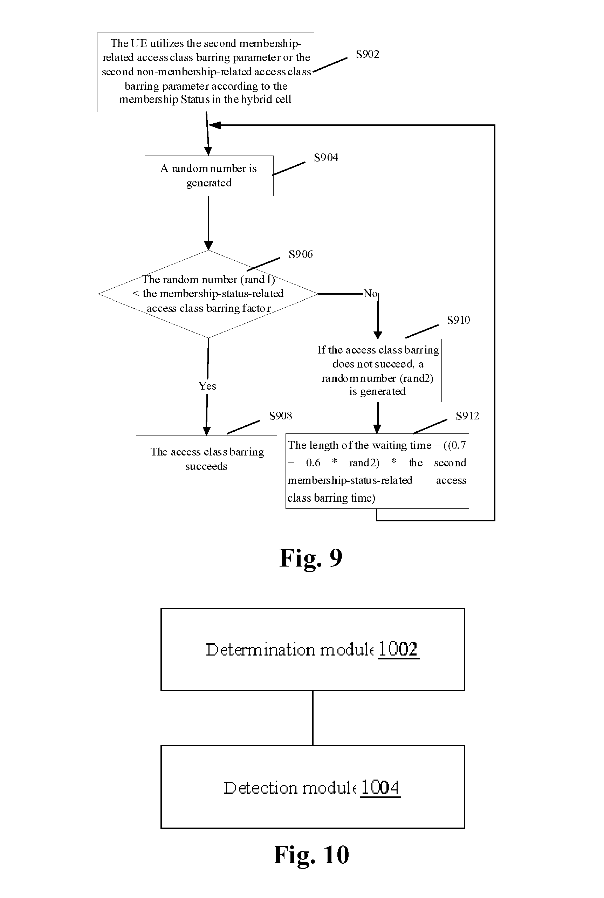

In combination with each of the above-mentioned embodiments, Fig. 9 is a flowchart of performing access class barring according to state-related access class barring parameters according to an embodiment of the present invention; and as shown in Fig. 9, the flow of performing access class barring according to state-related access class barring parameters comprises:
S902: the UE utilizes the second membership-status-related access class barring parameters or the second non-membership-status-related access class barring parameters according to the membership status in the hybrid cell; in particular, if the UE is a member, the second membership-status-related access class barring parameters are used as the state-related access class barring parameters; and if the UE is not a member, the second non-membership-status-related access class barring parameters are used as the state-related access class barring parameters;
S904: the UE generates a random number (rand1), with the value range of the random number being 0~1 ;
S906: it is detected whether the random number (rand1) is smaller than the membership/non-membership-status-related access class barring factor;
S908: if the random number (rand1) is smaller than the second membership-status-related access barring factor or the second non-membership-status-related access class barring factor, the access class barring succeeds, and the UE sends the RRC connection establishment request message to the serving base station;
S910: if the random number (rand1) is greater than or equal to the second membership-status-related access barring factor or the second non-membership-status-related access class barring factor, the access class barring fails, the UE generates a random number (rand2), with the value range of the random number being 0~1 ;
S912: after waiting for a time interval, with the interval of the waiting time being (0.7 + 0.6 * rand2) * the second membership-status-related access class barring time or the second non-membership-status-related access class barring time, a random number is generated again to perform next access class barring, i.e. executing step S902.

In order to enable the description of the present invention more explicit, now the present invention will be described in detail in combination with particular embodiments.

This embodiment describes the process of a member terminal access class barring of a member terminal in a hybrid cell, the access class barring factor of the member terminal in the embodiment > <0.5.
S1, the UE is in an RRC_IDLE state, and the upper layer requests to establish an RRC connection now so as to perform an MO service, such as a mobile originating call service;
S2, the UE detects the class barring information (ac-BarringInfo) is contained in the system message SIB2, and the UE does not belong to any special access class (AC11~15), then the UE belongs to an ordinary access class (AC0~9), and performs access class barring corresponding to the ordinary access class;
S3: the UE determines that it is a member terminal in the hybrid cell according to the CSG ID of the hybrid cell and the whitelist (which may be the CSG ID list of member identity access) stored by the UE;
S4, if the UE acquires the access class barring factor 0.8 corresponding to the mobile originating call service in the access class barring information which is corresponding to the ordinary access class and is in the SIB2, the access class barring time is 8 ms, and the membership status adjustment factor is 0.5, then the second membership-status-related access class barring factor of the UE = the access class barring factor, the second membership-status-related access class barring time = (the access class barring time * the membership status adjustment factor), the second membership-status-related access class barring factor is 0.8, and the second membership-status-related access class barring time is 4 ms;
S5, the UE generates a random number (rand1), with the value range of the random number being 0~1 ;
S6, if rand1 < 0.8, the access class barring succeeds, and the UE sends the RRC connection establishment request message to the serving base station; otherwise, the access class barring fails, and the UE generates a random number (rand2), with the value range of the random number being 0~1; then after waiting for (0.7 + 0.6 * rand 2) * 4 ms, the UE generates a random number again and continue the next access class barring.

This embodiment describes the process of a non-member terminal access class barring of a member terminal in a hybrid cell, the access class barring factor of the non-member terminal in the embodiment > 0.5.
S1, the UE is in an RRC_IDLE state, and the upper layer requests to establish an RRC connection now so as to perform an MO service, such as a mobile originating call service;
S2, if the UE detects the class barring information (ac-BarringInfo) is contained in the system message SIB2 and the UE does not belong to any special access class (AC11~15), then the UE belongs to an ordinary access class (AC0~9), and performs access class barring corresponding to the ordinary access class;
S3: the UE determines that it is not a member terminal in the hybrid cell according to the CSG ID of the hybrid cell and the whitelist (which may be the CSG ID list of member identity access) stored by the UE;
S4, if the UE acquires the access class barring factor 0.8 corresponding to the mobile originating call service in the access class barring information corresponding to the ordinary access class in the SIB2, the access class barring time is 8 ms, and the membership status adjustment factor is 0.5, then the second non-membership-status-related access class barring factor of the UE = (the access class barring factor * the membership status adjustment factor), the second non-membership-status-related access class barring time = the access class barring time, and then the second non-membership-status-related access class barring factor is 0.4, and the second non-membership-status-related access class barring time is 8 ms;
S5, the UE generates a random number (rand1), with the value range of the random number being 0~1;
S6, if rand1 < 0.4, the access class barring succeeds, and the UE sends the RRC connection establishment request message to the serving base station; otherwise, the access class barring fails, and the UE generates a random number (rand2), with the value range of the random number being 0~1; then after waiting for (0.7 + 0.6 * rand 2) * 8 ms, the UE generates a random number again and continue the next access class barring.

This embodiment describes the process of a member terminal access class barring of a member terminal in a hybrid cell, the access class barring factor of the member terminal in the embodiment > 0.5.
S1, the UE is in an RRC_IDLE state, and the upper layer requests to establish an RRC connection now so as to perform an MO service, such as a mobile originating call service;
S2, if the UE detects the class barring information (ac-BarringInfo) is contained in the system message SIB2 and the UE does not belong to any special access class (AC11~15), then the UE belongs to an ordinary access class (AC0~9), and performs access class barring corresponding to the ordinary access class;
S3: the UE determines that it is a member terminal in the hybrid cell according to the CSG ID of the hybrid cell and the whitelist (which may be the CSG ID list of member identity access) stored by the UE;
S4, if the UE acquires the access class barring factor 0.8 corresponding to the mobile originating call service in the access class barring information which is corresponding to the ordinary access class and is in the SIB2, the access class barring time is 8 ms, and the membership status adjustment factor is 0.5, then the second membership-status-related access class barring factor is max (0.8, 1 - 0.5) = 0.8, and the second membership-status-related access class barring time is 8 * 0.5 = 4 ms;
S5, the UE generates a random number (rand1), with the value range of the random number being 0~1; and
S6, if rand1 < 0.8, the access class barring succeeds, and the UE sends the RRC connection establishment request message to the serving base station; otherwise, the access class barring fails, and the UE generates a random number (rand2), with the value range of the random number being 0~1; then after waiting for (0.7 + 0.6 * rand 2) * 4 ms, the UE generates a random number again and continue the next access class barring.

This embodiment describes the process of a non-member terminal access class barring of a member terminal in a hybrid cell, the access class barring factor of the non-member terminal in the embodiment > 0.5.
S1, the UE is in an RRC_IDLE state, and the upper layer requests to establish an RRC connection now so as to perform an MO service, such as a mobile originating call service;
S2, if the UE detects the class barring information (ac-BarringInfo) contained in the system message SIB2 and the UE does not belong to any special access class (AC11~15), then the UE belongs to an ordinary access class (AC0~9), and performs access class barring corresponding to the ordinary access class;
S3: the UE determines that it is not a member user of the hybrid cell according to the CSG ID of the hybrid cell and the whitelist (which may be the CSG ID list of member identity access) stored by the UE;
S4, if the UE acquires the access class barring factor 0.8 corresponding to the mobile originating call service in the access class barring information which is corresponding to the ordinary access class and is in the SIB2, the access class barring time is 8 ms, and the membership status adjustment factor is 0.5, then the second non-membership-status-related access class barring factor is min (0.8, 1 - 0.5) = 0.5, and the second non-membership-status-related access class barring time is 8 ms;
S5, the UE generates a random number (rand1), with the value range of the random number being 0~1; and
S6, if rand1 < 0.5, the access class barring succeeds, and the UE sends the RRC connection establishment request message to the serving base station; otherwise, the access class barring fails, and the UE generates a random number (rand2), with the value range of the random number being 0~1; then after waiting for (0.7 + 0.6 * rand 2) * 8 ms, the UE generates a random number again and continue the next access class barring.

This embodiment describes the process of a member terminal access class barring of a member terminal in a hybrid cell, the access class barring factor of the member terminal in the embodiment > 0.5.
S1, the UE is in an RRC_IDLE state, and the upper layer requests to establish an RRC connection now so as to perform an MO service, such as a mobile originating call service;
S2, if the UE detects the class barring information contained in the system message SIB2 and the UE does not belong to any special access class (AC11~15), then the UE belongs to an ordinary access class (AC0~9), and performs access class barring corresponding to the ordinary access class;
S3: the UE determines that it is a member terminal of the hybrid cell according to the CSG ID of the hybrid cell and the whitelist (which may be the CSG ID list of member identity access) stored by the UE;
S4, if the UE acquires the access class barring factor 0.6 corresponding to the mobile originating call service in the access class barring information which is corresponding to the ordinary access class and is in the SIB2, the access class barring time is 8 ms, and the membership status adjustment factor is 0.2, then the second membership-status-related access class barring factor of the UE = the access class barring factor + the membership status adjustment factor; and the second membership-status-related access class barring time = the access class barring time, and then the second membership-status-related access class barring factor is 0.6 + 0.2 = 0.8, and the second non-membership-status-related access class barring time is 8 ms;
S5, the UE generates a random number (rand1), with the value range of the random number being 0~1; and
S6, if rand1 < 0.8, the access class barring succeeds, and the UE sends the RRC connection establishment request message to the serving base station; otherwise, the access class barring fails, and the UE generates a random number (rand2), with the value range of the random number being 0~1; then after waiting for (0.7 + 0.6 * rand 2) * 8 ms, the UE generates a random number again and continue the next access class barring.

This embodiment describes the process of a member terminal access class barring of a member terminal in a hybrid cell, the access class barring factor of the non-member terminal in the embodiment > 0.5.
S1, the UE is in an RRC_IDLE state, and the upper layer requests to establish an RRC connection now so as to perform an MO service, such as a mobile originating call service;
S2, if the UE detects the class barring information contained in the system message SIB2 and the UE does not belong to any special access class (AC11~15), then the UE belongs to an ordinary access class (AC0~9), and performs access class barring corresponding to the ordinary access class;
S3: the UE determines that it is not a member terminal of the hybrid cell according to the CSG ID of the hybrid cell and the whitelist (which may be the CSG ID list of member identity access) stored by the UE;
S4, if the UE acquires the access class barring factor 0.6 corresponding to the mobile originating call service in the access class barring information which is corresponding to the ordinary access class and is in the SIB2, the access class barring time is 8 ms, and the membership status adjustment factor is 0.2, then the second non-membership-status-related access class barring factor of the UE = the access class barring factor - the membership status adjustment factor; and the second non-membership-status-related access class barring time = the access class barring time, and then the second non-membership-status-related access class barring factor is 0.6 - 0.2 = 0.4, and the second non-membership-status-related access class barring time is 8 ms;
S5, the UE generates a random number (rand1), with the value range of the random number being 0~1; and
S6, if rand1 < 0.4, the access class barring succeeds, and the UE sends the RRC connection establishment request message to the serving base station; otherwise, the access class barring fails, and the UE generates a random number (rand2), with the value range of the random number being 0~1; then after waiting for (0.7 + 0.6 * rand 2) * 8 ms, the UE generates a random number again and continue the next access class barring.

Fig. 10 is a structural block diagram of an device for access class barring according to an embodiment of the present invention, as shown in Fig. 10, the device for access class barring comprises: a determination module **1002**, configured to determine state-related access class barring parameters of a terminal according to state access class barring information about the terminal and the membership status of the terminal in a cell; and a detection module **1004**, connected to the determination module **1002**, configured to bar access class according to the determined state-related access class barring parameters.

The above-mentioned state access class barring information may comprise various parameters related to access class barring, preferably, in this embodiment, the above-mentioned state access class barring information comprises at least one of the following: first state-related access class barring parameters, a membership status adjustment factor and access class barring parameters, wherein the access class barring parameters comprises an access class barring factor and access class barring time; the first state-related access class barring parameters comprises first membership-status-related access class barring parameters and first non-membership-status-related access class barring parameters, and a value range of the membership status adjustment factor is 0~1.

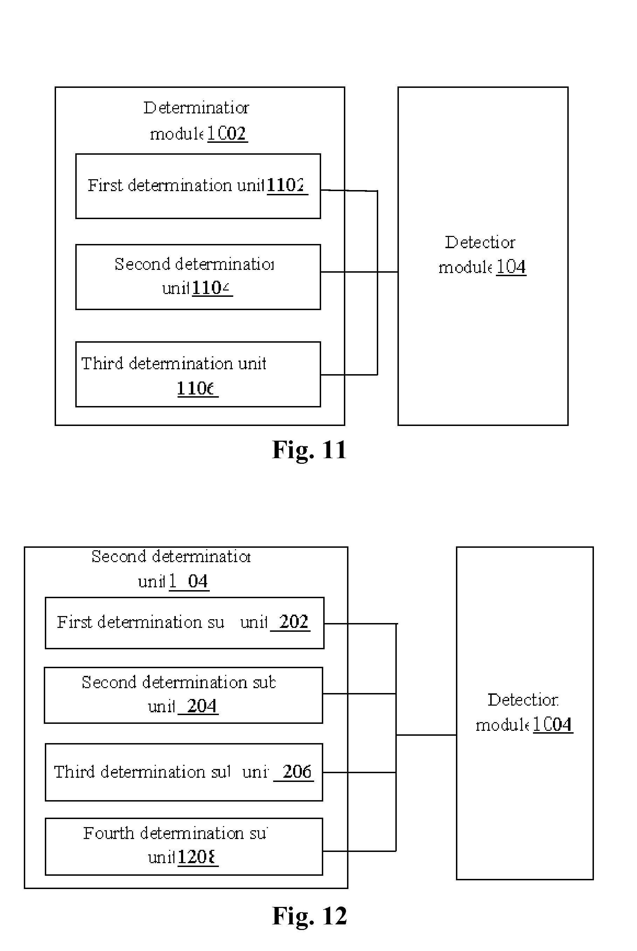

In order to improve the flexibility for determining the state-related access class barring parameters of the terminal, as shown in Fig. 11, the above-mentioned determination module **1002** further comprises: a first determination unit **1102**, connected to the detection module **1004**, configured to if the state access class barring information comprises the first state-related access class barring parameters, determine, according to the membership status of the terminal, the first state-related access class barring parameters corresponding to the membership status of the terminal to be the state-related access class barring parameters of the terminal, wherein the first state-related access class barring parameters comprises a first membership-status-related access class barring factor, a first non-membership-status-related access class barring factor, first membership-status-related access class barring time and first non-membership-status-related access class barring time.

The above-mentioned state-related access class barring parameters comprises: a second membership-status-related access class barring factor, a second non-membership-status-related access class barring factor, second membership-status-related access class barring time and second non-membership-status-related access class barring time.

In order to enable terminals with different membership statues to pass the detection with different priority levels, as shown in Fig. 11, the determination module 1002 further comprises: a second determination unit 1104, connected to the detection module 1004, configured to determine the second membership-status-related access class barring factor and the second non-membership-status-related access class barring factor of the state-related access class barring parameters of the terminal according to the state access class barring information of the terminal and the membership status of the terminal in the cell; and a third determination unit 1106, connected to the detection module 1004, configured to determine the second membership-status-related access class barring time and the second non-membership-status-related access class barring time of the state-related access class barring parameters of the terminal according to the state access class barring information of the terminal and the membership status of the terminal in the cell.

In order to realize that terminals with different membership statuses may perform access class barring based on different membership-status-related access class barring factors, as shown in Fig, 12, the second determination unit 1104 may further comprise: a first determination sub-unit 1202, connected to the detection module 1004, configured to, in the case that the state access class barring information comprises the membership status adjustment factor and the access class barring parameters, if the terminal is a member terminal of the cell, determine the second membership-status-related access class barring factor of the terminal to be the larger one between the access class barring factor and the difference between 1 and the membership status adjustment factor; and if the terminal is a non-member terminal of the cell, determine the second non-membership-status-related access class barring factor of the terminal to be the smaller one between the access class barring factor and the difference between 1 and the membership status adjustment factor; or a second determination sub-unit **1204**, connected to the detection module **1004**, configured to, in the case that the state access class barring information comprises the membership status adjustment factor and the access class barring parameters, if the terminal is the member terminal of the cell, determine the membership-status-related access class barring factor of the terminal to be the sum of the access class barring factor and the membership status adjustment factor; and if the terminal is a non-member terminal of the cell, determine the non-membership-status-related access class barring factor of the terminal to be the access class barring factor and the membership status adjustment factor; or a third determination sub-unit **1206**, connected to the detection module **1004**, configured to, in the case that the state access class barring information comprises the membership status adjustment factor and the access class barring parameters, if the terminal is a member terminal of the cell, determine the second membership-status-related access class barring factor of the terminal to be the access class barring factor; and if the terminal is a non-member terminal of the cell, determine the second non-membership-status-related access class barring factor of the terminal to be the product of the access class barring factor and the membership status adjustment factor; or a fourth determination sub-unit **1208**, connected to the detection module **1004**, configured to, in the case that the state access class barring information comprises the access class barring parameters, if the terminal is a member terminal of the cell, determine the second membership-status-related access class barring factor of the terminal to be the larger one between the access class barring factor and the difference between 1 and the access class barring factor; and if the terminal is a non-member terminal of the cell, determine the second non-membership-status-related access class barring factor of the terminal to be the smaller one between the access class barring factor and the difference between 1 and the access class barring factor.

In order to realize that terminals with different memberships may perform access class barring based on different membership-status-related access class barring time, as shown in Fig, 13, the third determination unit **1104** may further comprise: a fifth determination sub-unit **1302**, connected to the detection module **1004**, configured to be if the terminal is a member terminal of the cell, determining the second membership-status-related access class barring time of the terminal to be the product of the access class barring time and the membership status adjustment factor; and a sixth determination sub-unit **1304**, connected to the detection module **1004**, configured to be if the terminal is a non-member terminal of the cell, determining the non-second membership-status-related access class barring time of the terminal to be the access class barring time.

Preferably, in addition to the determination module **1002** and the detection module **1004** in Fig. 10, the above-mentioned device for access class barring further comprises: an acquisition module **1402** and a judgement module **1404**, as shown in Fig, 14, the acquisition module **1402**, connected to the determination module **1002**, is configured to acquire the membership/non-membership status-related access class barring parameters or the membership status adjustment factor, the access class barring factor and the access class barring time included in the state access class barring information of the terminal; and a judgement module **1404**, connected to the determination module **1002**, and is configured to detect whether the terminal is a member terminal of the cell according to a CSG ID of the cell where the terminal is located and a whitelist, containing the CSG ID, stored by the terminal.

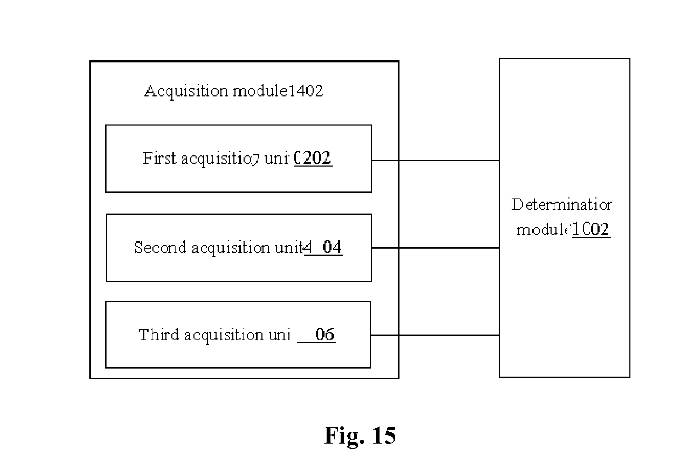

In order to enhance the practicability of this embodiment, as shown in Fig. 15, the acquisition module **1402** comprises: a first acquisition unit **1502**, configured to acquire the state access class barring information by receiving a system broadcast message carrying the state access class barring information.

In order to satisfy different application scenarios, several preferred methods for acquiring the membership status adjustment factor are provided in this embodiment, as shown in Fig. 15, the acquisition module **1402** may comprise: a second acquisition unit **1504**, connected to the determination module **1002**, configured to acquire the value of the membership status adjustment factor indicated by the base station; and/or a third acquisition unit **1506**, connected to the determination module **1002**, configured to acquire a preconfigured value of the membership status adjustment factor.

In summary, based on each of the above-mentioned preferred embodiments, a method and device for access class barring are provided in the present invention; the state-related AC barring parameters of a terminal is determined according to the state AC barring information of the terminal and the membership status of the terminal in a cell; that is, the membership-status-related access class barring parameters of a member terminal and the membership-status-related access class barring parameters of a non-member terminal are determined respectively; during access class detection, the case where member terminal and the non-member terminal may be detected based on different probability is realised; and the problem that in related technique it may not be guaranteed that member UEs own higher priority than non-member UEs do is solved, and hence it improves the effect of AC barring and conduces to improve user experience.

Obviously, those skilled in the art should know that each of the mentioned modules or steps of the present invention may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device; and under some circumstances, the shown or described steps may be executed in different orders, or may be independently manufactured as each integrated circuit module, or multiple modules or steps thereof may be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art; the present invention may have various changes and variations. Any amendments, equivalent substitutions, improvements, etc. within the principle of the present invention are all included in the scope of the protection of the present invention.

## Claims

1. A method for access class barring, **characterized by** comprising:
determining state-related access class barring parameters of a terminal according to state access class barring information about the terminal and membership status of the terminal in a cell; and
performing the access class barring according to the determined state-related access class barring parameters.

2. The method according to claim 1, **characterized in that** the state access class barring information comprises at least one of the following: first state-related access class barring parameters, a membership status adjustment factor and access class barring parameters, wherein the access class barring parameters comprises an access class barring factor and access class barring time; the first state-related access class barring parameters comprises first membership-status-related access class barring parameters and first non-membership-status-related access class barring parameters, and a value range of the membership status adjustment factor is 0~1.

3. The method according to claim 2, **characterized in that** determining the state-related access class barring parameters of the terminal according to the state access class barring information about the terminal and the membership status of the terminal in the cell comprises:
if the state access class barring information comprises the first state-related access class barring parameters, the terminal determining, according to the membership status of the terminal, the first state-related access class barring parameters corresponding to the membership status of the terminal to be the state-related access class barring parameters of the terminal, wherein the first state-related access class barring parameters comprises a first membership-status-related access class barring factor, a first non-membership-status-related access class barring factor, first membership-status-related access class barring time and first non-membership-status-related access class barring time.

4. The method according to claim 2, **characterized in that**,
the state-related access class barring parameters comprises: a second membership-status-related access class barring factor, a second non-membership-status-related access class barring factor, second membership-status-related access class barring time and second non-membership-status-related access class barring time;
if the state access class barring information comprises the membership status adjustment factor and the access class barring parameters, determining the state-related access class barring parameters of the terminal according to the state access class barring information about the terminal and the membership status of the terminal in the cell comprises: determining the second membership-status-related access class barring factor and the second non-membership-status-related access class barring factor of the state-related access class barring parameters of the terminal according to the state access class barring information of the terminal and the membership status of the terminal in the cell; and determining the second membership-status-related access class barring time and the second non-membership-status-related access class barring time of the state-related access class barring parameters of the terminal according to the state access class barring information of the terminal and the membership status of the terminal in the cell.

5. The method according to claim 4, **characterized in that** the determining the second membership-status-related access class barring factor and the second non-membership-status-related access class barring factor of the state-related access class barring parameters of the terminal according to the state access class barring information of the terminal and the membership status of the terminal in the cell comprises:
in the case that the state access class barring information comprises the membership status adjustment factor and the access class barring parameters:
if the terminal is a member terminal of the cell, then the second membership-status-related access class barring factor of the terminal is the larger one between the access class barring factor and a difference between 1 and the membership status adjustment factor; and if the terminal is a non-member terminal of the cell, then the second non-membership-status-related access class barring factor of the terminal is the smaller one between the access class barring factor and a difference between 1 and the membership status adjustment factor; or
if the terminal is the member terminal of the cell, then the second membership-status-related access class barring factor of the terminal is a sum of the access class barring factor and the membership status adjustment factor; and if the terminal is the non-member terminal of the cell, then the second non-membership-status-related access class barring factor of the terminal is a difference between the access class barring factor and the membership status adjustment factor; or
if the terminal is the member terminal of the cell, then the second membership-status-related access class barring factor of the terminal is the access class barring factor; and if the terminal is the non-member terminal of the cell, then the second non-membership-status-related access class barring factor of the terminal is the product of the access class barring factor and the membership status adjustment factor; or
in the case that the state access class barring information comprises the access class barring parameters:
if the terminal is the member terminal of the cell, then the second membership-status-related access class barring factor of the terminal is the larger one between the access class barring factor and the difference between 1 and the access class barring factor; and if the terminal is the non-member terminal of the cell, then the second non-membership-status-related access class barring factor of the terminal is the smaller one between the access class barring factor and the difference between 1 and the access class barring factor.

6. The method according to claim 4, **characterized in that** determining the second membership-status-related access class barring time and the second non-membership-status-related access class barring time of the state-related access class barring parameters of the terminal according to the state access class barring information of the terminal and the membership status of the terminal in the cell comprises:
if the terminal is a member terminal of the cell, then the second membership-status-related access class barring time of the terminal is the product of the access class barring time and the membership status adjustment factor; and if the terminal is a non-member terminal of the cell, then the second non-membership-status-related access class barring time of the terminal is the access class barring time.

7. The method according to any one of claims 4-6, **characterized in that** before determining the state-related access class barring parameters of the terminal according to the state access class barring information about the terminal and the membership status of the terminal in the cell, the method further comprises:
acquiring the first state-related access class barring parameters or the membership status adjustment factor, and the access class barring parameters included in the state access class barring information of the terminal;
detecting whether the terminal is the member terminal of the cell according to a closed subscriber group identity (CSG ID) of the cell where the terminal is located and a whitelist, containing the CSG ID, stored by the terminal.

8. The method according to claim 7, **characterized in that** acquiring the state access class barring information comprises: receiving a system broadcast message carrying the state access class barring information.

9. The method according to claim 7, **characterized in that** the membership status adjustment factor is acquired by means of one of the following: a base station indicating a value of the membership status adjustment factor and preconfiguring the value of the membership status adjustment factor.

10. An apparatus for access class barring, **characterized by** comprising:
a determination module, configured to determine state-related access class barring parameters of a terminal according to state access class barring information about the terminal and membership status of the terminal in a cell; and
a detection module, configured to bar access class according to the determined state-related access class barring parameters.

11. The device according to claim 10, **characterized in that** the state access class barring information comprises at least one of the following: first state-related access class barring parameters, a membership status adjustment factor and access class barring parameters, wherein the access class barring parameters comprises an access class barring factor and access class barring time; the first state-related access class barring parameters comprises first membership-status-related access class barring parameters and first non-membership-status-related access class barring parameters, and a value range of the membership status adjustment factor is 0~1.

12. The device according to claim 11, **characterized in that** the determination module comprises:
a first determination unit, configured to, if the state access class barring information comprises the first state-related access class barring parameters, determine, according to the membership status of the terminal, the first state-related access class barring parameters corresponding to the membership status of the terminal to be the state-related access class barring parameters of the terminal, wherein the first state-related access class barring parameters comprises a first membership-status-related access class barring factor, a first non-membership-status-related access class barring factor, first membership-status-related access class barring time and first non-membership-status-related access class barring time.

13. The device according to claim 11, **characterized in that**,
the state-related access class barring parameters comprises: a second membership-status-related access class barring factor, a second non-membership-status-related access class barring factor, second membership-status-related access class barring time and second non-membership-status-related access class barring time;
the determination module comprises: a second determination unit, configured to, if state access class barring information comprises the membership status adjustment factor and the access class barring parameters, determine the second membership-status-related access class barring factor and the second non-membership-status-related access class barring factor of the state-related access class barring parameters of the terminal according to the state access class barring information of the terminal and the membership status of the terminal in the cell; and a third determination unit, configured to, if the state access class barring information comprises the membership status adjustment factor and the access class barring parameters, determine the second membership-status-related access class barring time and the second non-membership-status-related access class barring time of the state-related access class barring parameters of the terminal according to the state access class barring information of the terminal and the membership status of the terminal in the cell.

14. The device according to claim 13, **characterized in that** the second determination unit comprises:
a first determination sub-unit, configured to, in the case that the state access class barring information comprises the membership status adjustment factor and the access class barring parameters, if the terminal is a member terminal of the cell, determine the second membership-status-related access class barring factor of the terminal to be the larger one between the access class barring factor and a difference between 1 and the membership status adjustment factor; and if the terminal is a non-member terminal of the cell, determine the second non-membership-status-related access class barring factor of the terminal to be the smaller one between the access class barring factor and a difference between 1 and the membership status adjustment factor; or
a second determination sub-unit, configured to, in the case that the state access class barring information comprises the membership status adjustment factor and the access class barring parameters, if the terminal is the member terminal of the cell, determine the second membership-status-related access class barring factor of the terminal to be a sum of the access class barring factor and the membership status adjustment factor; and if the terminal is the non-member terminal of the cell, determine the second non-membership-status-related access class barring factor of the terminal to be a difference between the access class barring factor and the membership status adjustment factor; or
a third determination sub-unit, configured to, in the case that the state access class barring information comprises the membership status adjustment factor and the access class barring parameters, if the terminal is the member terminal of the cell, determine the second membership-status-related access class barring factor of the terminal to be the access class barring factor; and if the terminal is the non-member terminal of the cell, determine the second non-membership-status-related access class barring factor of the terminal to be the product of the access class barring factor and the membership status adjustment factor; or
a fourth determination sub-unit, configured to, in the case that the state access class barring information comprises the access class barring parameters, if the terminal is the member terminal of the cell, determine the second membership-status-related access class barring factor of the terminal to be the larger one between the access class barring factor and the difference between 1 and the access class barring factor; and if the terminal is the non-member terminal of the cell, determine the second non-membership-status-related access class barring factor of the terminal to be the smaller one between the access class barring factor and the difference between 1 and the access class barring factor.

15. The device according to claim 13, **characterized in that** the third determination unit comprises:
a fifth determination sub-unit, configured to, if the terminal is the member terminal of the cell, determine the second membership-status-related access class barring time of the terminal to be the product of the access class barring time and the membership status adjustment factor; and
a sixth determination sub-unit, configured to, if the terminal is the non-member terminal of the cell, determine the second non-membership-status-related access class barring time of the terminal to be the access class barring time.

16. The device according to any one of claims 13-15, **characterized in that** the device further comprises:
an acquisition module, configured to acquire the membership/non-membership status related access class barring parameters or the membership status adjustment factor, the access class barring factor and the access class barring time included in the state access class barring information of the terminal; and
a judgement module, configured to detect whether the terminal is the member terminal of the cell according to a closed subscriber group identity (CSG ID) of the terminal in the cell and a whitelist, containing the CSG ID, stored by the terminal.

17. The device according to claim 16, **characterized in that** the acquisition module comprises:
a first acquisition unit, configured to acquire the state access class barring information by receiving a system broadcast message carrying the state access class barring information.

18. The device according to claim 16, **characterized in that** the acquisition module comprises:
a second acquisition unit, configured to acquire a value of the membership status adjustment factor indicated by the base station; and/or
a third acquisition unit, configured to acquire a preconfigured value of the membership status adjustment factor.
